# EUROPEAN PATENT APPLICATION

(11) **EP 3 113 330 A1**
(43) Date of publication of application: **04.01.2017**
(21) Application number: 15755420.5
(22) Date of filing: 11.02.2015
(51) Int. Cl.: H02J 50/00, B60L 5/00, B60L 11/18, H01M 10/46, H02J 7/00

(54) **CONTACTLESS POWER TRANSMISSION SYSTEM AND POWER-RECEIVING DEVICE**

(30) Priority: 25.02.2014 JP 2014034355
(71) Applicant: Kabushiki Kaisha Toyota Jidoshokki, Kariya-shi, Aichi 448-8671 (JP)
(72) Inventor: SATO, Yoshiaki, Kariya-shi Aichi 448-8671 (JP)
(74) Representative: TBK
(86) International application number: PCT/JP2015/053716
(87) International publication number: WO 2015/129458

(57) **Abstract**

This contactless power transmission system is equipped with a plurality of power-transmitting devices and a power-receiving device. The plurality of power-transmitting devices each have a primary-side coil into which AC power is inputted. The power-receiving device has a secondary-side coil capable of receiving AC power in a contactless manner from one of the primary-side coils of the plurality of power-transmitting devices. The power-receiving device is provided with a holding unit for holding the primary-side coils, and an identification unit. The identification unit identifies the target coil among the plurality of primary-side coils held by the holding unit.

## Description

### TECHNICAL FIELD

The present invention relates to a contactless power transmission system and a power reception device.

### BACKGROUND ART

A known contactless power transmission system does not use a power transmission cord and a power transmission cable. Patent document 1 discloses a system that includes a power transmission device having a primary coil, to which AC power is input, and a power reception device having a secondary coil capable of receiving AC power from the primary coil in a contactless manner. In the system disclosed in patent document 1, when the primary coil and the secondary coil are located at positions that enable magnetic field resonance, the power transmission device transmits AC power to the power reception device in a contactless manner.

A number of vehicles are parked in a parking area of a public facility. When the above system is employed in such an area, a number of primary coils need to be arranged in the parking area. In this case, it is also necessary to recognize which one of the primary coils is to perform power transmission with a secondary coil.

### PRIOR ART DOCUMENT

### Patent Document

Patent Document 1: Japanese Laid-Open Patent Publication No. 2013-243882

### SUMMARY OF THE INVENTION

### Problems that are to be Solved by the Invention

It is an object of the present invention to provide a contactless power transmission system and a power reception device that are capable of recognizing the combination of a primary coil and a secondary coil that perform power transmission. Means for Solving the Problem

To achieve the above object, a first aspect of the present invention provides a contactless power transmission system that includes at least one power transmission device and a power reception device. The power transmission device includes one or more primary coils to which AC power is input. The power reception device includes a secondary coil capable of receiving the AC power, which is input to the primary coil, in a contactless manner, and a detection unit that detects AC power received by the secondary coil or DC power converted from the AC power. In the contactless power transmission system, when a predetermined transmission condition is satisfied, contactless power transmission is performed between the primary coil and the secondary coil. The contactless power transmission system includes a recognition unit that is included in the power reception device and recognizes the primary coils; a specification unit that specifies, when the recognition unit recognizes the primary coils, a subject coil satisfying the transmission condition from the primary coils recognized by the recognition unit; and an identification power control unit that is included in the specification unit and performs input control of the AC power so that first identification power serving as the AC power is input to each of the primary coils recognized by the recognition unit and, subsequent to the input of the first identification power, second identification power serving as the AC power is input to each of the primary coils recognized by the recognition unit. The identification power control unit sets a set period that differs between the primary coils recognized by the recognition unit. The set period is at least one of a period from an input start time of the first identification power to an input start time of the second identification power, a period from the input start time of the first identification power to an input end time of the second identification power, a period from an input end time of the first identification power to the input start time of the second identification power, and a period from the input end time of the first identification power to the input end time of the second identification power. The specification unit specifies the subject coil by comparing each set period, which differs between the primary coils recognized by the recognition unit, with a detection period that corresponds to each set period, which differs between the primary coils recognized by the recognition unit, and is derived from a detection result of the detection unit.

In the above configuration, the subject coil may be specified without providing the power transmission device with a sensor that detects the position of the secondary coil. Additionally, at least one of four set periods from one of the input start time and the input end time of the first identification power to one of the input start time and the input end time of the second identification power is used as a parameter that differs between the primary coils recognized by the recognition unit. In this case, each set period subtly varies even when the input start time of the first identification power varies between the primary coils. This allows for relatively easy specification of the subject coil without accurately synchronizing the input start time of the first identification power to the primary coils.

Preferably, in the contactless power transmission system, each set period that differs between the primary coils recognized by the recognition unit is an interval period that is from an input end time of the first identification power to an input start time of the second identification power, and a first input period during which the first identification power is input is set to be the same in the primary coils recognized by the recognition unit.

When the primary coils have different first input periods, some primary coils may have longer first input periods. In this regard, in the above configuration, the primary coils have the same first input period. Thus, the above shortcoming may be avoided. Additionally, although the first input period is the same, the primary coils have different interval periods. This allows for specification of the subject coil. Thus, the subject coil may be easily specified while reducing the consumption of power needed to specify the subject coil.

Preferably, the contactless power transmission system further includes a cancel control unit that cancels input of the second identification power, which is performed by the identification power control unit, when the detection unit does not detect the AC power from an input start time of the first identification power to a specified time that is subsequent to an input end time of the first identification power and prior to an input start time of the second identification power.

When AC power is not detected from the input start time of the first identification power to the specified time, there is a high probability that the primary coils recognized by the recognition unit do not include the subject coil or the power transmission is not performed in a normal manner. In such a case, input of the second identification power to each primary coil is unnecessary. In this regard, in the above configuration, when AC power is not detected from the input start time of the first identification power to the specified time, input of the second identification power is cancelled. This reduces the consumption of power needed to specify the subject coil and allows a subsequent process to be readily performed.

Preferably, in the contactless power transmission system, the set period is set based on unique information of the primary coil.

In the above configuration, different set periods may be set for the primary coils in a relatively easy manner.

Preferably, in the contactless power transmission system, the power transmission device includes a power transmission communication unit that performs wireless communication, the power reception device includes a power reception communication unit that performs wireless communication, and the recognition unit recognizes the primary coil of the power transmission device that exists in a communication range of the power reception communication unit through wireless communication between the power reception communication unit and the power transmission communication unit.

To achieve the above object, a second aspect of the present invention is a contactless power transmission system that includes at least one power transmission device and a power reception device. The power transmission device includes one or more primary coils to which AC power is input. The power reception device includes a secondary coil capable of receiving the AC power, which is input to the primary coil, in a contactless manner, and a detection unit that detects AC power received by the secondary coil or DC power converted from the AC power. In the contactless power transmission system, when a predetermined transmission condition is satisfied, contactless power transmission is performed between the primary coil and the secondary coil. The contactless power transmission system includes a recognition unit that is included in the power reception device and recognizes the primary coils; a specification unit that specifies, when the recognition unit recognizes the primary coils, a subject coil that satisfies the transmission condition from the primary coils recognized by the recognition unit; and an identification power control unit that is included in the specification unit and performs input control of the AC power so that a pulse serving as the AC power is input to each of the primary coils recognized by the recognition unit a predetermined number of times within a predetermined specified period. The identification power control unit sets the number of inputs of the pulse within the specified period to differ between the primary coils recognized by the recognition unit. The specification unit specifies the subject coil by comparing the number of detections of the AC power that is detected by the detection unit in the specified period with the number of inputs of the pulse that is set for each of the primary coils recognized by the recognition unit.

To achieve the above object, a third aspect of the present invention is a power reception device capable of receiving AC power from a power transmission device that includes a primary coil to which AC power is input in a contactless manner. The power reception device includes a secondary coil that receives the AC power, which is input to the primary coil, in a contactless manner when a predetermined transmission condition is satisfied; a detection unit that detects AC power received by the secondary coil or DC power converted from the AC power; a recognition unit that recognizes the primary coil; and a specification unit that specifies, when the recognition unit recognizes the primary coils, a subject coil that satisfies the transmission condition from the primary coils recognized by the recognition unit. The specification unit includes an instruction unit that instructs input control of the AC power so that first identification power serving as the AC power is input to each of the primary coils recognized by the recognition unit and, subsequent to input of the first identification power, second identification power serving as the AC power is input to each of the primary coils recognized by the recognition unit. The instruction unit instructs a set period to differ between the primary coils recognized by the recognition unit. The set period is at least one of a period from an input start time of the first identification power to an input start time of the second identification power, a period from the input start time of the first identification power to an input end time of the second identification power, a period from an input end time of the first identification power to the input start time of the second identification power, and a period from the input end time of the first identification power to the input end time of the second identification power. The specification unit specifies the subject coil by comparing each set period, which differs between the primary coils recognized by the recognition unit, with a detection period that corresponds to each set period, which differs between the primary coils recognized by the recognition unit, and is derived from a detection result of the detection unit.

In the above configuration, the subject coil may be specified without providing the power transmission device with a sensor that detects the position of the secondary coil. Additionally, at least one of four set periods from one of the input start time and the input end time of the first identification power to one of the input start time and the input end time of the second identification power is used as a parameter that differs between the primary coils recognized by the recognition unit. In this case, each set period subtly varies even when the input start time of the first identification power varies between the primary coils. This allows for a relatively easy specification of the subject coil without accurately synchronizing the input start time of the first identification power to the primary coils.

### BRIEF DESCRIPTION OF THE DRAWINGS

Fig. 1 is a schematic perspective view showing a contactless power transmission system of the present invention.
Fig. 2 is a block diagram showing the electrical configuration of the contactless power transmission system.
Fig. 3 is a conceptual chart of a list.
Fig. 4 is a schematic diagram showing a first case.
Fig. 5A is a time chart taken in the first case showing power reception of a power reception device, Fig. 5B is a time chart taken in the first case showing power transmission of a first power transmission device, and Fig. 5C is a time chart taken in the first case showing power transmission of a second power transmission device.
Fig. 6A is a time chart taken in a second case showing power reception of the power reception device, Fig. 6B is a time chart taken in the second case showing power transmission of the first power transmission device, and Fig. 6C is a time chart taken in the second case showing power transmission of the second power transmission device.
Fig. 7 is a conceptual chart of a modified example of a list.
Fig. 8A is a time chart taken in a modified example showing power reception of the power reception device, Fig. 8B is a time chart taken in the modified example showing power transmission of the first power transmission device, and Fig. 8C is a time chart taken in the modified example showing power transmission of the second power transmission device.

### EMBODIMENTS OF THE INVENTION

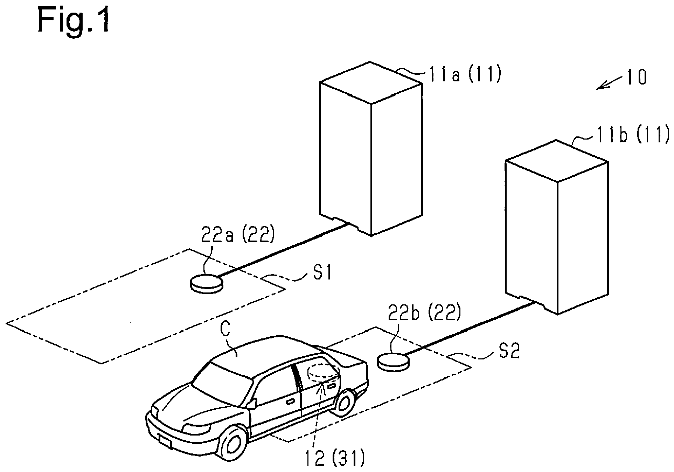

One embodiment of a contactless power transmission system according to the present invention that is applied to a vehicle will now be described with reference to Figs. 1 to 6C.

Referring to Fig. 1, a contactless power transmission system 10 includes power transmission devices 11, which are capable of transmitting power in a contactless manner, and power reception devices 12. The power transmission devices 11 are installed in charging stations. The power reception devices 12 are installed in vehicles C.

The power transmission devices 11 are respectively arranged for parking spaces S1, S2 where two vehicles C may be parked. For the sake of brevity, the power transmission device 11 located near the first parking space S1 is referred to as the first power transmission device 11 a, and the power transmission device 11 located near the second parking space S2 is referred to as the second power transmission device 11 b. The power transmission device 11 a and the power transmission device 11 b are identical.

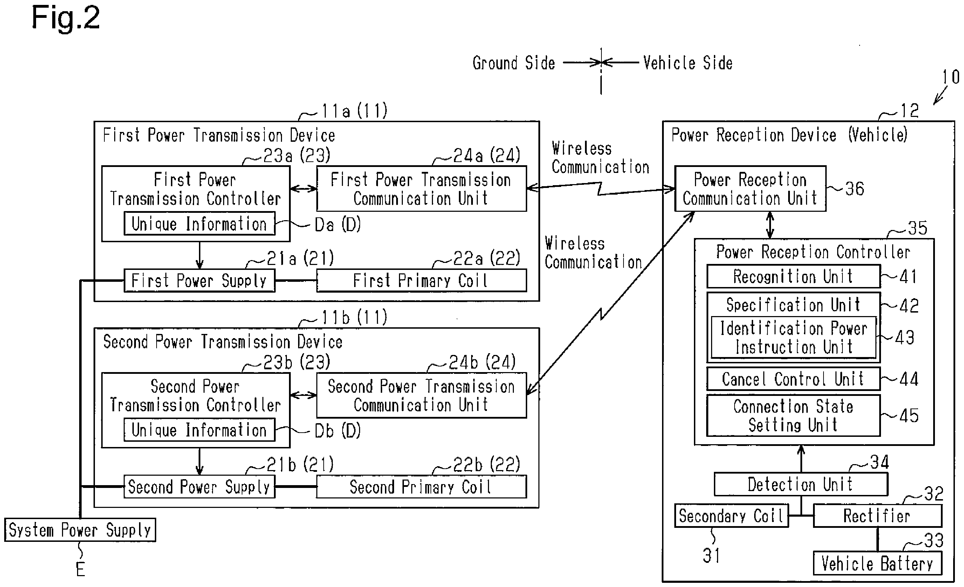

As shown in Fig. 2, the first power transmission device 11a includes a first power supply 21 a capable of outputting AC power having a predetermined frequency and a first primary coil 22a that receives AC power output from the first power supply 21 a. The first power supply 21 a converts system power, which is received from a system power supply E functioning as an infrastructure, into AC power and outputs the converted AC power to the first primary coil 22a.

The first power transmission device 11 a includes a first power transmission controller 23a, which functions as a power transmission control unit that performs various controls on the first power transmission device 11 a, and a first power transmission communication unit 24a, which performs wireless communication. The first power transmission controller 23a receives signals from the first power transmission communication unit 24a. The first power transmission controller 23a controls the first power transmission communication unit 24a so that the first power transmission communication unit 24a transmits a predetermined signal.

In the same manner as the first power transmission device 11 a, the second power transmission device 11 b includes a second power supply 21 b, a second primary coil 22b, a second power transmission controller 23b, and a second power transmission communication unit 24b. The configuration of the second power transmission device 11 b is the same as the configuration of the first power transmission device 11 a and will not be described in detail.

As shown in Fig. 1, the primary coil 22a is located in the parking space S1. The primary coil 22b is located in the parking space S2. The power reception device 12 includes a secondary coil 31 capable of receiving AC power from one of the primary coils 22a, 22b in a contactless manner. The secondary coil 31 is configured to be capable of performing magnetic field resonance with the primary coils 22a, 22b. For example, a primary capacitor (not shown) is connected in series or parallel to each of the primary coils 22a, 22b to form a resonance circuit. In the same manner, a secondary capacitor (not shown) is connected in series or parallel to the secondary coil 31 to form a resonance circuit. The resonance circuit including the first primary coil 22a, the resonance circuit including the second primary coil 22b, and the resonance circuit including the secondary coil 31 generate the same resonance frequency.

In the above configuration, under a condition in which the secondary coil 31 is located at a position that enables magnetic field resonance to be performed with one of the primary coils 22a, 22b, when the primary coil capable of performing magnetic field resonance receives AC power, the resonance circuit including the primary coil performs magnetic field resonance with the resonance circuit including the secondary coil 31. Consequently, the secondary coil 31 receives AC power from the primary coil in a contactless manner. In this case, the frequency of AC power that is output from the power supplies 21 a, 21 b is preferably set to be the same as or approximate to the resonance frequency of each resonance circuit.

A condition for performing magnetic field resonance includes a positional relationship between each of the primary coils 22a, 22b and the secondary coil 31. More specifically, to perform power transmission through magnetic field resonance, one of the primary coils 22a, 22b and the secondary coil 31 need to be proximate to each other enough to perform magnetic field resonance. That is, a condition for performing power transmission between one of the primary coils 22a, 22b and the secondary coil 31 is such that one of the primary coils 22a, 22b and the secondary coil 31 are located at positions that enable magnetic field resonance. More specifically, a transmission condition is such that the transmission efficiency is greater than or equal to a predetermined threshold value efficiency when transmitting power from one of the primary coils 22a, 22b to the secondary coil 31 through magnetic field resonance.

As shown in Fig. 1, the secondary coil 31 is located at a position that would be opposed to one of the primary coils 22a, 22b, that is, at a bottom portion of the vehicle C. When the vehicle C is parked in one of the parking spaces S1, S2, the secondary coil 31 is opposed to the primary coil arranged in the parking space where the vehicle C is parked at a position that enables magnetic field resonance to be performed with the primary coil.

As shown in Fig. 2, the power reception device 12 includes a rectifier 32, which rectifies AC power received by the secondary coil 31, and a vehicle battery 33. The vehicle battery 33 is charged by receiving DC power that has been rectified by the rectifier 32.

The power reception device 12 includes a detection unit 34, which detects AC power received by the secondary coil 31 (hereafter, simply referred to as received power), and a power reception controller 35, which functions as a power reception control unit. The detection unit 34 transmits the detection result to the power reception controller 35. Thus, the power reception controller 35 recognizes the received power. More specifically, based on the detection result of the detection unit 34, the power reception controller 35 recognizes patterns of the received power such as a power level of the received power and time when the received power is detected.

Additionally, the power reception device 12 includes an SOC sensor (not shown) that detects the state of charge (SOC) of the vehicle battery 33 and transmits the detection result to the power reception controller 35. Thus, the power reception controller 35 recognizes the state of charge of the vehicle battery 33 based on the detection result from the SOC sensor.

The power reception device 12 includes a power reception communication unit 36, which exchanges signals with each of the power transmission communication units 24a, 24b. The power reception device 12 is configured to be capable of performing wireless communication. The power reception controller 35 receives signals from the power reception communication unit 36. The power reception controller 35 controls the power reception communication unit 36 so that the power reception communication unit 36 transmits a predetermined signal.

The communication range of the power transmission communication units 24a, 24b and the power reception communication unit 36 is set to be larger than the first parking space S1 and the second parking space S2. Thus, in the present embodiment, a plurality of power transmission devices 11 a, 11 b are included in the communication range of the power reception communication unit 36. More specifically, the power reception communication unit 36 is capable of performing wireless communication with the power transmission communication units of the plurality of power transmission devices 11 a, 11 b, that is, the first power transmission communication unit 24a and the second power transmission communication unit 24b. Communication protocols of the communication units 24a, 24b, 36 may be Bluetooth (registered trademark), Zigbee (registered trademark), Wi-fi, or the like. The communication range of each of the power transmission communication units 24a, 24b is the same as the communication range of the power reception communication unit 36.

The contactless power transmission system 10 is configured to recognize the combination of the power transmission device 11 and the power reception device 12 that perform power transmission. The configuration will now be described. For the sake of brevity, the primary coils 22a, 22b are referred to as the primary coil 22, the power supplies 21 a, 21 b are referred to as the power supply 21, the power transmission controllers 23a, 23b are referred to as the power transmission controller 23, and the power transmission communication units 24a, 24b are referred to as the power transmission communication unit 24 as long as there is particularly no need or no means to distinguish the components from each other.

As shown in Fig. 2, the power reception controller 35 includes a recognition unit 41 that recognizes the surrounding of the power reception device 12, more specifically, the primary coil 22 of the power transmission device 11 that exists in the communication range of the power reception communication unit 36. The recognition unit 41 controls the power reception communication unit 36 so that the power reception communication unit 36 broadcasts a search signal, which functions as a response request signal. When the power transmission communication unit 24 receives the search signal, the power transmission controller 23 controls the power transmission communication unit 24 so that the power transmission communication unit 24 transmits a search response signal to the power reception communication unit 36. Unique information D of the power transmission device 11, which is stored in a particular memory region of the power transmission controller 23, is set in the search response signal. More specifically, the first power transmission controller 23a has first unique information Da, which is unique to the first power transmission device 11 a, as the unique information D. The second power transmission controller 23b has second unique information Db, which is unique to the second power transmission device 11 b, as the unique information D. Any information may be used as the unique information D as long as the unique information D differs between the power transmission devices 11 and the primary coils 22. The unique information D may be, for example, communication ID information, which is address information of the power transmission communication unit 24, or communication channel information.

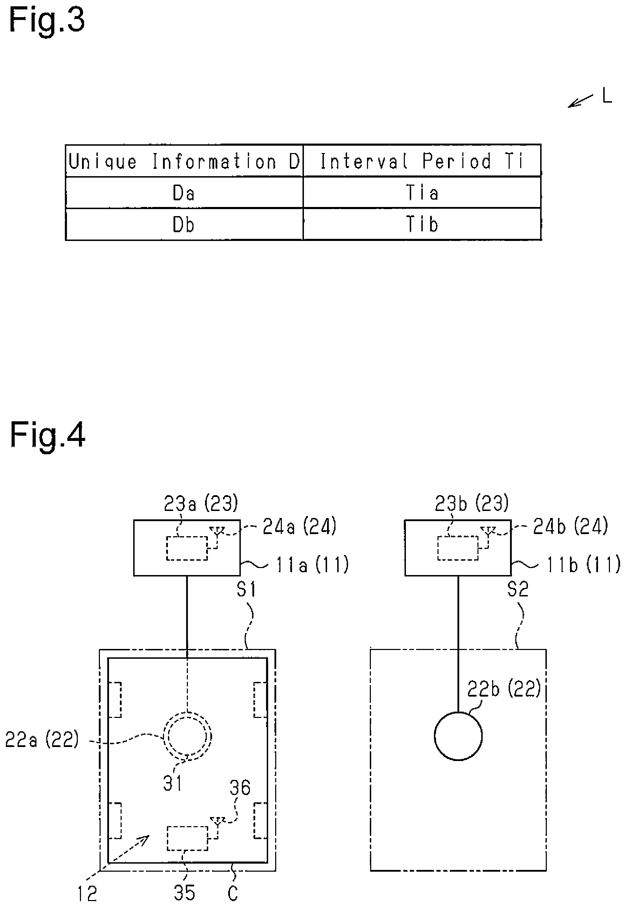

The recognition unit 41 recognizes the power transmission device 11 that includes the power transmission communication unit 24 existing in the communication range of the power reception communication unit 36 based on the search response signal received by the power reception communication unit 36. As shown in Fig. 3, the recognition unit 41 forms a list L of the unique information D of the recognized power transmission devices 11.

As described above, the power transmission device 11 includes the single primary coil 22. Thus, the primary coil 22 and the power transmission device 11 are in a one-to-one correspondence with each other. Hence, the unique information D of the power transmission device 11 is unique information of the primary coil 22. The recognition unit 41 recognizes the primary coils 22 that exist around the power reception device 12. The list L shows the primary coils 22 that are obtained by the recognition unit 41.

In the present embodiment, the two power transmission devices 11 a, 11 b are recognized by the recognition unit 41. In this case, as shown in Fig. 3, the unique information Da, Db of the two power transmission devices 11 a, 11 b is set in the list L. The recognition unit 41 may have any trigger for performing the recognition, that is, the power reception communication unit 36 may have any trigger for transmitting a search signal. The trigger for performing the recognition may be, for example, when the vehicle C is stopped or when a charge activation switch located in the vehicle C is operated. Additionally, the recognition unit 41 may regularly perform the recognition in a predetermined cycle.

As shown in Fig. 2, the power reception controller 35 includes a specification unit 42. The recognition unit 41 recognizes the primary coils 22a, 22b of the power transmission devices 11 a, 11 b. Then, among the power transmission devices 11 a, 11 b, the specification unit 42 specifies the one of the power transmission devices 11 including the primary coil 22 that satisfies the condition for performing transmission to the secondary coil 31. Hereafter, the primary coil 22 that satisfies the transmission condition for the secondary coil 31 is referred to as the subject coil, and the power transmission device 11 including the subject coil is referred to as the subject power transmission device.

The specification unit 42 includes an identification power instruction unit 43, which instructs control for inputting AC power to each of the primary coils 22a, 22b. The identification power instruction unit 43 instructs each of the primary coils 22a, 22b of the power transmission devices 11 a, 11 b set in the list L to input identification power, which serves as AC power, twice at an interval of interval period Ti. The identification power instruction unit 43 sets an input pattern of AC power to each of the primary coils 22a, 22b as described below. The first identification power is input to each of the primary coils 22a, 22b throughout a first input period T1. At the time the interval period Ti elapses from when the input of the first identification power ends, the input of the second identification power starts. The second identification power is input throughout a second input period T2.

The interval period Ti is the period from when the input of the first identification power ends to when the input of the second identification power starts. Hereafter, the identification power input first is referred to as the first identification power, and the identification power input second is referred to as the second identification power.

The first input period T1 and the second input period T2 are set to be the same in the power transmission devices 11 and the primary coils 22. Additionally, the first input period T1 and the second input period T2 are set to be the same, and the first identification power and the second identification power are set to have the same power level.

The power transmission devices 11a, 11b have different interval periods Ti. More specifically, the identification power instruction unit 43 calculates a first interval period Tia of the first power transmission device 11 a, that is, the first primary coil 22a, based on the first unique information Da. Also, the identification power instruction unit 43 calculates a second interval period Tib of the second power transmission device 11 b, that is, the second primary coil 22b, based on the second unique information Db. As shown in Fig. 3, the identification power instruction unit 43 sets the first interval period Tia in correspondence with the first unique information Da and the second interval period Tib in correspondence with the second unique information Db.

The interval periods Tia, Tib are each set so that the detection unit 34 is able to separately detect AC power subsequent to the first interval period Tia and AC power subsequent to the second interval period Tib based on the specifications of the detection unit 34 or the like. For example, the difference between the first interval period Tia corresponding to the first power transmission device 11 a and the second interval period Tib corresponding to the second power transmission device 11 b is set to be longer than the second input period T2. Any configuration may be used to calculate the interval period Ti from the unique information D. The configuration for calculating the interval period Ti may be, for example, such that the unique information D is converted into numerical information and the numerical information is multiplied by a predetermined time.

After the input pattern of AC power for each of the primary coils 22a, 22b is set in the above manner, the identification power instruction unit 43 instructs each of the power transmission devices 11 a, 11 b to input AC power to the corresponding primary coils 22a, 22b in accordance with the input pattern. More specifically, the identification power instruction unit 43 uses the power reception communication unit 36 to transmit information related to the input pattern in which the first interval period Tia is set to the first power transmission communication unit 24a and information related to the input pattern in which the second interval period Tib is set to the second power transmission communication unit 24b. When the power transmission communication units 24a, 24b receive the information related to the input pattern, the power transmission controllers 23a, 23b recognize that the first identification power and the second identification power are to be input to the primary coils 22a, 22b at an interval of the corresponding interval periods Tia, Tib.

The identification power instruction unit 43 uses the power reception communication unit 36 to broadcast a power transmission request signal that requests the power transmission devices 11 a, 11 b set in the list L to input the series of the identification power. When the power transmission communication units 24a, 24b receive the power transmission request signal, the power transmission controllers 23a, 23b control the power supplies 21 a, 21 b so that the identification power is input in accordance with the input pattern that has been recognized. In this case, the identification power instruction unit 43 and the function of the power transmission controller 23 to perform power control in accordance with the input pattern instructed by the identification power instruction unit 43 correspond to an "identification power control unit."

In the above configuration, in which the first identification power and the second identification power are input to each of the primary coils 22a, 22b at an interval of the interval period Ti, the specification unit 42 specifies the subject power transmission device and the subject coil based on the detection result of the detection unit 34 and the interval period Ti. More specifically, the specification unit 42 determines, from when the power transmission request signal was transmitted, whether or not the detection unit 34 has detected AC power corresponding to the first identification power and AC power corresponding to the second identification power. More specifically, the specification unit 42 determines whether or not the detection unit 34 has detected AC power twice at a predetermined detection interval Ts. The detection interval Ts is a detection period.

"The detection unit 34 detecting AC power" may be determined when the detection unit 34 detects AC power having a power level that is greater than or equal to a predetermined threshold value. In this case, the threshold value may be obtained by multiplying the power level of the identification power by a predetermined threshold value efficiency.

When AC power is detected twice at the detection interval Ts, the specification unit 42 compares the detection interval Ts with the interval periods Tia, Tib and determines whether or not any of the interval periods Tia, Tib conforms to the detection interval Ts or the difference between any of the interval periods Tia, Tib and the detection interval Ts is within a predetermined allowed range. When one of the interval periods Tia, Tib conforms to the detection interval Ts or the difference from the detection interval Ts is within the predetermined allowed range, the specification unit 42 specifies the primary coil 22 in which the interval period Ti is set as the subject coil.

When the detection interval Ts is outside the allowed range for each of the interval periods Tia, Tib, the specification unit 42 determines that there is no subject power transmission device in the power transmission devices 11 a, 11 b that are recognized by the recognition unit 41 or that the secondary coil 31 is not located in a position where power is receivable. In this case, the power reception controller 35 may again perform the recognition using the recognition unit 41 and the specification using the specification unit 42. Alternatively, the power reception controller 35 may perform an abnormality handling process such as issuing an announcement that the vehicle C is not located at a normal position.

The situation in which the detection interval Ts is outside the allowed range for each of the interval periods Tia, Tib includes when the detection interval Ts cannot be measured, that is, when the secondary coil 31 cannot receive AC power. A situation in which the secondary coil 31 of the vehicle C is not located in a position where power is receivable may be, for example, when the secondary coil 31 is so distant from all of the primary coils 22a, 22b that power transmission cannot be performed.

As shown in Fig. 2, the power reception controller 35 includes a cancel control unit 44. When the detection unit 34 does not detect AC power from the input start time of the first identification power to a specified time of the interval period Ti, the cancel control unit 44 cancels the input of the second identification power, which is performed by the identification power instruction unit 43. The specified time is included between the input end time of the first identification power and the input start time of the second identification power.

The specified time differs between the power transmission devices 11 set in the list L. More specifically, the specified time is an intermediate time between the input end time of the first identification power and the input start time of the second identification power for each of the primary coils 22a, 22b. In other words, the specified time is when one-half of the interval period Ti elapses from the input end time of the first identification power. In this case, the primary coils 22a, 22b have different interval periods Ti. Thus, the specified time differs between the power transmission devices 11.

The specified time corresponding to the first primary coil 22a, that is, the first interval period Tia, is referred to as the first specified time. Also, the specified time corresponding to the second primary coil 22b, that is, the second interval period Tib, is referred to as the second specified time. When the detection unit 34 does not detect AC power from the input start time of the first identification power to the first specified time, the cancel control unit 44 uses the power reception communication unit 36 to transmit a cancel request signal to the first power transmission communication unit 24a. In the same manner, when the detection unit 34 does not detect AC power from the input start time of the first identification power to the second specified time, the cancel control unit 44 uses the power reception communication unit 36 to transmit a cancel request signal to the second power transmission communication unit 24b. Here, the cancel control unit 44 specifies the specified time by using the time when the power transmission request signal is transmitted as the input start time of the first identification power.

When the power transmission communication units 24a, 24b receive the cancel request signal, the power transmission controllers 23a, 23b control the power supplies 21 a, 21 b so that the second identification power is not input. When the cancel request signal is transmitted to all of the power transmission devices 11 that are set in the list L, the power reception controller 35 may again perform the recognition using the recognition unit 41 and the specification using the specification unit 42. Alternatively, the power reception controller 35 may perform an abnormality handling process such as the issuance of an error announcement.

As shown in Fig. 2, the power reception controller 35 includes a connection state setting unit 45. When the subject coil is specified by the specification unit 42, the connection state setting unit 45 sets the subject power transmission device including the subject coil and the power reception device 12 to a connected state, or a communication established state, in which the connection is established through the power transmission communication unit 24 of the subject power transmission device and the power reception communication unit 36 of the power reception device 12.

The connection state setting unit 45 executes a verification process for verifying the power transmission controller 23 of the subject power transmission device as a communication peer. The connection state setting unit 45 uses the power reception communication unit 36 to transmit a connection request signal to the power transmission communication unit 24 of the subject power transmission device. When the power transmission communication unit 24 receives the connection request signal, the power transmission controller 23 of the subject power transmission device executes a verification process for verifying the power reception controller 35 that transmitted the connection request signal as a communication peer. When the verification process is executed in a normal manner, the power transmission controller 23 uses the power transmission communication unit 24 to transmit a connection response signal to the power reception controller 35. When the power reception communication unit 36 receives the connection response signal, the power reception controller 35 determines that the connection state has been completed in a normal manner. This enables the power transmission controller 23 and the power reception controller 35 to exchange information other than information related to the specification of the subject power transmission device and the subject coil and, more specifically, information related to the received power.

In other words, the connected state refers to a state in which information related to the received power may be exchanged. Also, the connected state refers to a state in which the power transmission device 11 and the power reception device 12 have been paired so that information is exchanged through the power transmission communication unit 24 and the power reception communication unit 36. The power reception device 12 is configured not to be simultaneously connected to a plurality of power transmission devices 11.

The contactless power transmission system 10 is configured to perform power transmission until a predetermined termination condition is satisfied under a condition in which the subject power transmission device and the power reception device 12 are in the connected state. More specifically, the power transmission controller 23 of the subject power transmission device controls the power supply 21 so that charging power, which has a higher power level than the identification power, is input to the subject coil under a condition in which the subject power transmission device and the power reception device 12 are in the connected state. Consequently, the charging power is transmitted to the power reception device 12 from the subject power transmission device to charge the vehicle battery 33.

During the power transmission of the charging power, the power reception controller 35 regularly recognizes the power level of the received power. The power reception controller 35 uses the power reception communication unit 36 to transmit information related to the power level of the received power to the power transmission communication unit 24 of the subject power transmission device. When the power transmission communication unit 24 receives the above information, the power transmission controller 23 of the subject power transmission device controls the power supply 21 so that the power level of the received power becomes a desired power level. That is, during the charging of the vehicle battery 33, the power transmission controller 23 of the subject power transmission device and the power reception controller 35 exchange information through the power transmission communication unit 24 and the power reception communication unit 36.

Additionally, the power reception controller 35 determines whether or not the termination condition is satisfied. When the termination condition is satisfied, the power reception controller 35 uses the power reception communication unit 36 to transmit a charge termination request signal, which requests for charging termination, to the power transmission communication unit 24 of the subject power transmission device. When the power transmission communication unit 24 receives the charge termination request signal, the power transmission controller 23 of the subject power transmission device controls the power supply 21 so that the power supply 21 stops outputting the charging power.

The termination condition may be, for example, when the state of charge of the vehicle battery 33 is in a fully charged state or a charge termination trigger state or when the power transmission is interfered for one reason or another. Additionally, if the power transmission device 11 includes a termination switch, the termination condition may be when the termination switch is operated. In this case, the power transmission controller 23 only needs to determine whether or not the termination switch is operated. Thus, there may be any termination condition, and a subject that determines whether or not the termination condition is satisfied may be the power reception controller 35 or the power transmission controller 23.

As described above, the power reception controller 35 performs the recognition of the power transmission device 11 using the recognition unit 41 and the specification of the subject power transmission device using the specification unit 42. When the subject power transmission device is specified in a normal manner, the power reception controller 35 executes a series of processes such as the setting using the connection state setting unit 45 and the power transmission of the charging power. When the subject power transmission device is not specified in a normal manner, the power reception controller 35 again recognizes the power transmission device 11 using the recognition unit 41 or performs an abnormality coping process such as the issuance of an error announcement.

When the recognition unit 41 recognizes one power transmission device 11, the power reception controller 35 uses the power reception communication unit 36 to transmit the power transmission request signal of the identification power to the power transmission communication unit 24 of the power transmission device 11 that has been recognized by the recognition unit 41. When the power transmission communication unit 24 receives the power transmission request signal, the power transmission controller 23 of the power transmission device 11 controls the power supply 21 so that the identification power is input to the primary coil 22. The power reception controller 35 determines whether or not the detection unit 34 has detected AC power corresponding to the identification power. When AC power corresponding to the identification power has been detected, the power reception controller 35 determines that the power transmission is normal and performs the setting with the connection state setting unit 45 and the power transmission for charging power. When AC power corresponding to the identification power is not detected, the power reception controller 35 may again perform the recognition using the recognition unit 41 or perform an abnormality coping process such as the issuance of an error announcement.

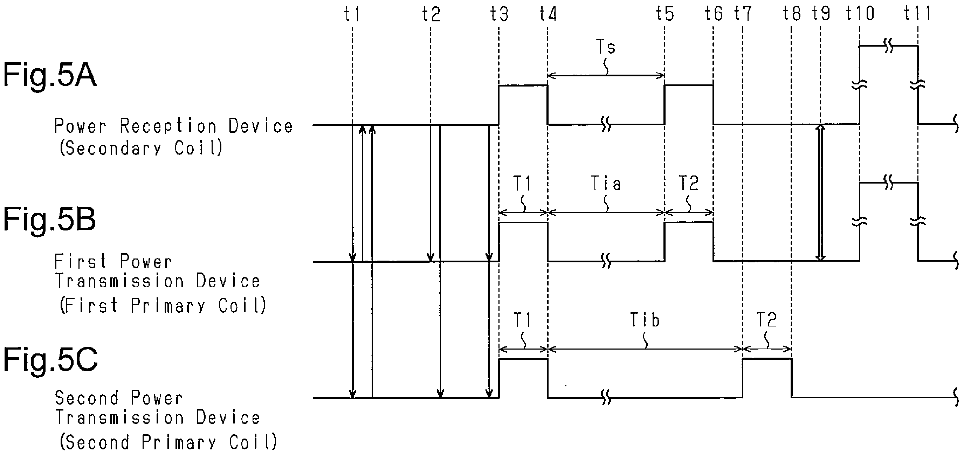

The operation of the contactless power transmission system 10 will now be described with reference to Figs. 4 to 6C. The time charts of Figs. 5A to 6C show the power level that is input to the primary coils 22a, 22b and the secondary coil 31. The arrows shown in Figs. 5A to 6C indicate communication modes.

Referring to Fig. 4, in a first case, it is assumed that the vehicle C is parked in a normal manner in the first parking space S1. The phrase "parked in a normal manner" refers to when the first primary coil 22a and the secondary coil 31 are located at positions that enable magnetic field resonance and, more specifically, positions where the first primary coil 22a and the secondary coil 31 are opposed to each other.

As shown in Figs. 5A to 5C, at time t1, the recognition unit 41 of the power reception device 12 recognizes the power transmission device 11. More specifically, the power reception communication unit 36 broadcasts a search signal. In this case, the power transmission communication units 24a, 24b of the power transmission devices 11 a, 11b each transmit the search response signal. Consequently, the recognition unit 41 recognizes the power transmission devices 11 a, 11 b.

The power reception device 12 forms the list L and sets the interval periods Tia, Tib in the list L. At time t2, the power reception device 12 transmits information related to the AC power input patterns, in which the interval periods Tia, Tib are set, to the power transmission devices 11 a, 11 b. More specifically, the power reception communication unit 36 transmits the information in which the first interval period Tia is set to the first power transmission communication unit 24a. Also, the power reception communication unit 36 transmits the information in which the second interval period Tib is set to the second power transmission communication unit 24b.

Subsequently, the power reception communication unit 36 transmits the power transmission request signal. Then, the power transmission devices 11 a, 11 b each start a control sequence for inputting the identification power. More specifically, as shown in Figs. 5B and 5C, at time t3, the first identification power is input to each of the primary coils 22a, 22b. In this case, as shown in Fig. 5A, the secondary coil 31 receives AC power. Time t3 is the input start time of the first identification power.

As shown in Figs. 5B and 5C, at time t4 that is when the first input period T1 elapses from time t3, the input of the first identification power to each of the primary coils 22a, 22b ends. Consequently, as shown in Fig. 5A, the secondary coil 31 stops receiving AC power. Time t4 is the input end time of the first identification power. In the first case, the secondary coil 31 receives AC power corresponding to the first identification power. Thus, the cancel control unit 44 does not cancel the input of the second identification power.

As shown in Fig. 5B, at time t5 that is when the first interval period Tia elapses from time t4, the second identification power is input to the first primary coil 22a. Thus, as shown in Fig. 5A, the secondary coil 31 receives AC power. The detection interval Ts conforms to the first interval period Tia.

As shown in Fig. 5B, at time t6 that is when the second input period T2 elapses from time t5, the input of the second identification power ends. Consequently, as shown in Fig. 5A, the secondary coil 31 stops receiving AC power.

As shown in Fig. 5C, at time t7 that is subsequent to time t6 and when the second interval period Tib elapses from time t4, the second identification power is input to the second primary coil 22b. At time t8 that is when the second input period T2 elapses from time t7, the input of the second identification power to the second primary coil 22b ends. Each of time t5 and time t7 is the input start time of the second identification power. Each of time t6 and time t8 is the input end time of the second identification power. In the first case, the secondary coil 31 does not satisfy the transmission condition for the second primary coil 22b. Thus, the secondary coil 31 does not receive AC power during a period when the second identification power is input to the second primary coil 22b, that is, a period from time t7 to time t8.

After the input of the identification power to the primary coils 22a, 22b ends, the specification unit 42 of the power reception controller 35 specifies the power transmission device 11. In the first case, the detection interval Ts conforms to the first interval period Tia. Thus, the first primary coil 22a, to which the identification power is input at an interval of the first interval period Tia, is specified as the subject coil. Accordingly, the first power transmission device 11 a is specified as the subject power transmission device.

As shown in Figs. 5A and 5B, at time t9, the power reception device 12 and the first power transmission device 11 a are changed to the connected state. This completes the preparation for starting to charge the vehicle battery 33. At time t10, charging power is input to the first primary coil 22a, and the charging power is received by the secondary coil 31. At time t11 that is when the termination condition is satisfied, the input of the charging power to the first primary coil 22a ends. This terminates the power transmission to the power reception device 12 from the first power transmission device 11 a.

In a second case, it is assumed that the vehicle C is not parked at the normal position, that is, the secondary coil 31 cannot receive AC power from any of the primary coils 22a, 22b.

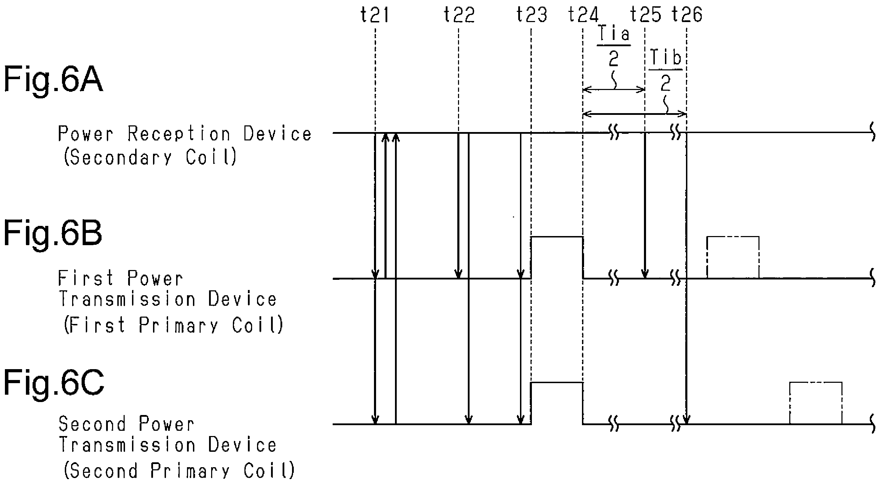

As shown in Figs. 6A to 6C, at time t21, the recognition unit 41 of the power reception device 12 recognizes the power transmission devices 11 a, 11 b. At time t22, the power reception device 12 transmits information related to the identification power in which the interval periods Tia, Tib are set to the power transmission devices 11a, 11b.

Subsequently, the power reception device 12 transmits the power transmission request signal to each of the power transmission devices 11 a, 11 b. Thus, as shown in Figs. 6B and 6C, at time t23, the first identification power is input to the primary coils 22a, 22b. In this case, the secondary coil 31 does not satisfy the transmission condition for any of the primary coils 22a, 22b. Thus, as shown in Fig. 6A, the secondary coil 31 does not receive AC power.

At time t24, the input of the first identification power ends. At time t25 that is when one-half of the first interval period Tia elapses from time t24, the power reception device 12 transmits the cancel request signal to the first power transmission device 11 a. Hence, the second identification power, which is the second identification power, is not input to the first primary coil 22a.

In the same manner, at time t26 that is when one-half of the second interval period Tib elapses from time t24, the power reception device 12 transmits the cancel request signal to the second power transmission device 11 b. Hence, the second identification power is not input to the second primary coil 22b. Each of time t25 and time t16 is the specified time.

The present embodiment has the advantages described below.
(1) The contactless power transmission system 10 includes the power transmission devices 11 and the power reception device 12. The power transmission devices 11 each include the primary coil 22 to which AC power is input. The power reception device 12 includes the secondary coil 31 that receives AC power from the primary coil 22 in a contactless manner when the transmission condition is satisfied. The power reception controller 35 of the power reception device 12 includes the recognition unit 41, which recognizes the primary coils 22 of the power transmission devices 11, and the specification unit 42. When the recognition unit 41 recognizes a plurality of primary coils 22, the specification unit 42 specifies the subject coil from the primary coils 22 that satisfies the transmission condition. The specification unit 42 instructs the power transmission controller 23 so that the identification power is input to each primary coil 22 twice at an interval of the interval period Ti that differs between the primary coils 22. The power transmission controller 23 controls the power supply 21 in accordance with the instruction from the specification unit 42. The specification unit 42 specifies the subject coil that satisfies the transmission condition with the secondary coil 31 by comparing each interval period Ti with the detection interval Ts of AC power received by the secondary coil 31.

In the above configuration, the subject coil is specified without providing the power transmission device 11 with a sensor that detects the position of the vehicle C. Additionally, the interval period Ti is used as a parameter that differs between the primary coils 22 recognized by the recognition unit 41. Thus, even when the input start time of the first identification power varies between the primary coils 22 due to variations in time when the power transmission request signal is received, the subject coil is properly specified.

Alternatively, the primary coils 22 may have different power levels. However, this may fail to specify the subject coil or erroneously specify a different primary coil 22 as the subject coil due to variations in the transmission efficiency between the primary coil 22 and the secondary coil 31 depending on their relative positions. In this regard, in the present embodiment, the subject coil is specified based on the detection interval Ts instead of the power level. Thus, the above shortcoming may be avoided while improving the accuracy for specifying the subject coil.
(2) The first input period T1, during which the first identification power is input, is set to be the same in the primary coils 22 that are recognized by the recognition unit 41. This reduces the power consumption associated with the specification of the subject coil. More specifically, in a configuration in which the primary coils 22 have different first input periods T1 instead of different interval periods Ti, there would be a primary coil 22 having a longer first input period T1 than the other primary coils 22. This tends to increase the consumption of power needed to specify the subject coil. In this regard, in the present embodiment, the above shortcoming may be avoided.
(3) The interval period Ti is set based on the unique information D of the power transmission device 11. This easily allows the primary coils 22 to have different interval periods Ti.
(4) The power reception controller 35 includes the cancel control unit 44. When the secondary coil 31 does not receive AC power from the input start time of the first identification power to the specified time of the interval period Ti, the cancel control unit 44 cancels the input of the second identification power. This avoids unnecessary input of the identification power and reduces the power consumption. Additionally, without the input of the second identification power, the recognition that is again performed by the recognition unit 41 or the abnormality handling process is readily performed.
(5) The specified time, which is a trigger for cancelling the input of the second identification power, is set to differ between the primary coils 22 in correspondence with the interval periods Ti. More specifically, the specified time is set to a time from the input end time of the first identification power to a time when one-half of the interval period Ti elapses. Thus, the input of the second identification power may be cancelled prior to the input start time of the second identification power in a relatively easy manner without setting the specified time taking into consideration the longest interval period Ti or the shortest interval period Ti.

The above embodiment may be modified as follows.

In the above embodiment, the number of times the identification power is input is two times for each of the primary coil 22. However, the number of times the identification power is input may differ between the primary coils 22.

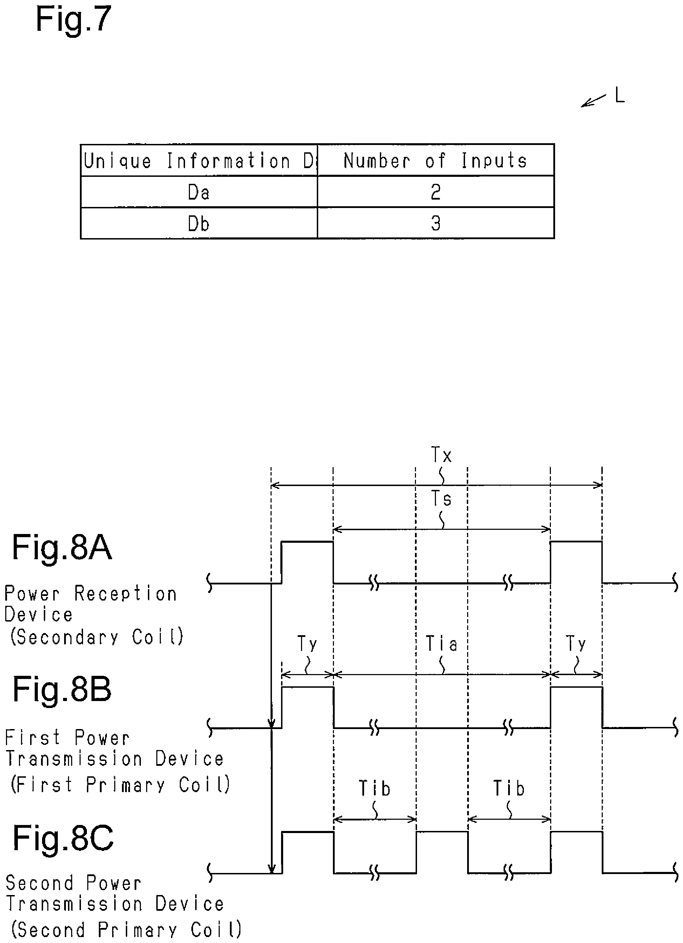

For example, as shown in Fig. 7, the identification power instruction unit 43 may set the number of inputs of the identification power in the list L in association with the unique information Da, Db of the power transmission devices 11a, 11b. In this case, the number of inputs of the identification power is two or more and differs for each unique information D. More specifically, "2" is set for the first unique information Da as the number of inputs, and "3" is set for the second unique information Db as the number of inputs. The identification power instruction unit 43 uses the power reception communication unit 36 to transmit information related to the number of inputs to the power transmission devices 11 a, 11 b.

When the power transmission communication units 24a, 24b receive the above information, the power transmission controllers 23a, 23b calculate the interval periods Tia, Tib so that the identification power is input within a predetermined specified period Tx for the number of times that is set in the information. More specifically, when the number of inputs is n and the input time is Ty, each of the interval periods Tia, Tib is (Tx-n×Ty)/(n-1). The power transmission controllers 23a, 23b control the power supplies 21 a, 21 b so that the identification power is input to the primary coils 22a, 22b for the set number of times at an interval of the calculated interval periods Tia, Tib.

In the above configuration, as shown in Fig. 8B, the identification power is input to the first primary coil 22a twice within the specified period Tx. As shown in Fig. 8C, the identification power is input to the second primary coil 22b three times within the specified period Tx. In this case, the first interval period Tia differs from the second interval period Tib. As shown in Fig. 8A, the detection unit 34 detects that the secondary coil 31 has received AC power twice. The detection interval Ts conforms to the first interval period Tia. This specifies the first primary coil 22a as the subject coil and the first power transmission device 11 a as the subject power transmission device.

Particularly, in this modified example, the specification of the subject coil is completed within the specified period Tx. More specifically, the period needed to specify the subject coil does not vary in accordance with the number of primary coils 22 that are recognized by the recognition unit 41. Thus, a subsequent process may be readily performed.

In the above modified example, instead of the configuration in which the subject coil is specified based on the detection interval Ts and the interval periods Tia, Tib, the subject coil may be specified by comparing the number of inputs of the identification power that is input to the primary coils 22a, 22b within the specified period Tx with the number of detections of AC power that is detected by the detection unit 34. In this case, the identification power that is input throughout the predetermined input period Ty is a "pulse."

In the present embodiment, the interval period Ti, which is from the input end time of the first identification power to the input start time of the second identification power, differs between the primary coils 22. Instead, for example, a period (hereafter, referred to as the first period) from the input start time of the first identification power to the input start time of the second identification power may differ. Alternatively, a period (hereafter, referred to as the second period) from the input start time of the first identification power to the input end time of the second identification power may differ. Alternatively, a period (hereafter, referred to as the third period) from the input end time of the first identification power to the input end time of the second identification power may differ. Thus, the input patterns of AC power to the primary coils 22 only need to be set so that at least one of the set periods including the first period, the second period, the third period, and the interval period Ti differ. The specification unit 42 may specify the subject coil by comparing the set period that differs between the primary coils 22 with the detection period, which corresponds to the set period differing between the primary coils 22 recognized by the recognition unit 41 and is derived from the detection result of the detection unit 34.

When the first periods are configured to differ from each other, the "detection period" is from time when the detection unit 34 starts detecting AC power for the first time to time when the detection unit 34 starts detecting AC power for the second time. When the third periods are configured to differ from each other, the "detection period" is from the time when the detection of the first AC power ends to the time when the detection of the second AC power ends.

The primary coils 22 have the same first input period T1. Instead, the primary coils 22 may have different first input periods T1. However, to reduce power consumption, it is preferred that the primary coils 22 have the same first input period T1.

The difference between the first interval period Tia and the second interval period Tib may be the same as or shorter than the second input period T2.

The primary coils 22 have the same input start time for the first identification power. Instead, the input start time of the first identification power may differ between the primary coils 22. Even in this case, the subject coil may be specified based on the detection interval Ts and the interval period Ti.

The interval period Ti is set based on the unique information D. However, the interval period Ti may be set based on any aspect as long as the primary coils 22 have different interval periods Ti. For example, the interval periods Ti may be sequentially shifted by a predetermined period.

The first identification power and the second identification power may have the same power level or different power levels. Additionally, the identification power and the charging power may have the same power level.

The first input period T1 and the second input period T2 may be the same as or different from each other.

The specified time differs between the primary coils 22. However, the specified time may be the same. More specifically, the cancel control unit 44 may be configured to broadcast the cancel request signal when the detection unit 34 does not detect AC power from the input start time of the first identification power to the specified time. In this case, it is preferred that the specified time be set from the input end time of the first identification power to the time when a period that is shorter than the shortest interval period Ti of the interval periods Ti elapses. This allows for a relatively early cancellation. Thus, a subsequent process may be readily performed. Additionally, the process may be simplified as compared to a configuration in which the cancel request signal is transmitted each time.

The identification power instruction unit 43 may be configured to broadcast a first power transmission request signal to start input of the first identification power and then separately transmit a second power transmission request signal each time the input of the second identification power starts to start input of the second identification power. In this case, it is preferred that the cancel control unit 44 cancels the transmission of the second power transmission request signal performed by the identification power instruction unit 43 when the detection unit 34 does not detect AC power from the transmission time of the first power transmission request signal to the specified time.

The cancel control unit 44 may be configured so that when the specification unit 42 specifies the subject coil, the input of the second identification power is cancelled subsequent to the time when the subject coil is specified. This avoids an unnecessary input of the second identification power.

The search signal does not have to be used when the recognition unit 41 recognizes the power transmission device 11. For example, the power transmission communication unit 24 may be configured to regularly send a beacon in which the unique information D is set. In this case, it is preferred that when the power reception communication unit 36 receives the beacon, the power reception controller 35 recognizes the power transmission device 11. This allows for the recognition of the power transmission device 11 without transmitting the search signal. The recognition unit 41 only needs to be configured to recognize the primary coil 22 of the power transmission device 11 that exists in the communication range of the power reception communication unit 36 through wireless communication between the power reception communication unit 36 and the power transmission communication unit 24.

Each power transmission device 11 includes one primary coil 22. Instead, each power transmission device 11 may include a plurality of primary coils 22. In this case, it is preferred that the power transmission device 11 is configured to separately control AC power that is input to the primary coils 22. For example, a plurality of power supplies 21 is preferably arranged in correspondence with the primary coils 22.

In the above configuration, the power transmission communication unit 24 of the power transmission device 11 preferably transmits a search response signal in which the unique information of each primary coil 22 is set to the power reception communication unit 36. The power reception controller 35 forms a list of the primary coils 22 and sets the interval period Ti in correspondence with each primary coil 22 based on the search response signal. In this case, the interval period Ti of each primary coil 22 may be set based on the unique information of the primary coil 22. Alternatively, the interval periods Ti may sequentially differ from one another by a predetermined period.

The power reception controller 35 uses the power reception communication unit 36 to transmit information related to the input patterns in which the primary coils 22 of the power transmission device 11 correspond to the interval periods Ti to the power transmission communication unit 24 of the power transmission device 11. The power transmission controller 23 inputs the identification power to each primary coil 22 at an interval of the interval period Ti corresponding to the primary coil 22 based on the information. The primary coils 22 have different interval periods Ti. Thus, the subject coil may be specified. In this case, one power transmission device 11 is configured to be capable of connecting to the same number of power reception devices 12 as the primary coils 22.

The number of power transmission devices 11 is not limited and may be three or more. The contactless power transmission system 10 only needs to include at least one power transmission device 11 that includes one or more primary coils 22.

The cancel control unit 44 may be omitted.

The connection state setting unit 45 may be omitted. Thus, the setting of the connection state is not necessary.

When the power transmission device 11 is specified as the subject power transmission device, the power transmission controller 23 may be changed from an unused state to a used state. When the power transmission controller 23 is in the used state, it is preferred that the power transmission communication unit 24 does not transmit the search response signal even when receiving the search signal. Thus, the power transmission device 11 that is in the used state is eliminated from recognition subjects of the recognition unit 41 of a power reception device 12 differing from the power reception device 12 that triggered the used state, that is, the power reception device 12 that satisfies the transmission condition. This reduces the recognition subjects of the recognition unit 41 of the different power reception device 12.

The detection unit 34 detects AC power that is received by the secondary coil 31. Instead, the detection unit 34 may detect DC power that is converted from AC power.

The resonance frequency of the resonance circuit including the primary coil 22 and the resonance frequency of the resonance circuit including the secondary coil 31 may differ from each other within a range in which the power transmission can be performed.

The primary capacitor and the secondary capacitor may be omitted. In this case, magnetic field resonance may be performed using parasitic capacitance of the primary coil 22 and the secondary coil 31.

AC power received by the secondary coil 31 may be used for a purpose different from the charging of the vehicle battery 33.

The power reception device 12 may be installed in any device. The power reception device 12 may be installed, for example, in a robot, an electric wheel chair, or the like.

The power transmission device 11 may include a resonance circuit formed by the primary coil 22 and the primary capacitor and a primary coupling coil that is coupled to the resonance circuit by electromagnetic induction. The power reception device 12 may include a resonance circuit formed by the secondary coil 31 and the secondary capacitor and a secondary coupling coil that is coupled to the resonance circuit by electromagnetic induction.

## Claims

1. A contactless power transmission system including at least one power transmission device and a power reception device, wherein the power transmission device includes one or more primary coils to which AC power is input, the power reception device includes a secondary coil capable of receiving the AC power, which is input to the primary coil, in a contactless manner, and a detection unit that detects AC power received by the secondary coil or DC power converted from the AC power, and when a predetermined transmission condition is satisfied, contactless power transmission is performed between the primary coil and the secondary coil, the contactless power transmission system comprising:
a recognition unit that is included in the power reception device and recognizes the primary coils;
a specification unit that specifies, when the recognition unit recognizes the primary coils, a subject coil satisfying the transmission condition from the primary coils recognized by the recognition unit; and
an identification power control unit that is included in the specification unit and performs input control of the AC power so that first identification power serving as the AC power is input to each of the primary coils recognized by the recognition unit and, subsequent to the input of the first identification power, second identification power serving as the AC power is input to each of the primary coils recognized by the recognition unit, wherein
the identification power control unit sets a set period that differs between the primary coils recognized by the recognition unit, wherein the set period is at least one of
a period from an input start time of the first identification power to an input start time of the second identification power,
a period from the input start time of the first identification power to an input end time of the second identification power,
a period from an input end time of the first identification power to the input start time of the second identification power, and
a period from the input end time of the first identification power to the input end time of the second identification power; and
wherein the specification unit specifies the subject coil by comparing each set period, which differs between the primary coils recognized by the recognition unit, with a detection period that corresponds to each set period, which differs between the primary coils recognized by the recognition unit, and is derived from a detection result of the detection unit.

2. The contactless power transmission system according to claim 1, wherein
each set period that differs between the primary coils recognized by the recognition unit is an interval period that is from an input end time of the first identification power to an input start time of the second identification power, and
a first input period during which the first identification power is input is set to be the same in the primary coils recognized by the recognition unit.

3. The contactless power transmission system according to claim 1 or 2, further comprising a cancel control unit that cancels input of the second identification power, which is performed by the identification power control unit, when the detection unit does not detect the AC power from an input start time of the first identification power to a specified time that is subsequent to an input end time of the first identification power and prior to an input start time of the second identification power.

4. The contactless power transmission system according to any one of claims 1 to 3, wherein the set period is set based on unique information of the primary coil.

5. The contactless power transmission system according to any one of claims 1 to 4, wherein
the power transmission device includes a power transmission communication unit that performs wireless communication,
the power reception device includes a power reception communication unit that performs wireless communication, and
the recognition unit recognizes the primary coil of the power transmission device that exists in a communication range of the power reception communication unit through wireless communication between the power reception communication unit and the power transmission communication unit.

6. A contactless power transmission system including at least one power transmission device and a power reception device, wherein the power transmission device includes one or more primary coils to which AC power is input, the power reception device includes a secondary coil capable of receiving the AC power, which is input to the primary coil, in a contactless manner, and a detection unit that detects AC power received by the secondary coil or DC power converted from the AC power, and when a predetermined transmission condition is satisfied, contactless power transmission is performed between the primary coil and the secondary coil, the contactless power transmission system comprising:
a recognition unit that is included in the power reception device and recognizes the primary coils;
a specification unit that specifies, when the recognition unit recognizes the primary coils, a subject coil that satisfies the transmission condition from the primary coils recognized by the recognition unit; and
an identification power control unit that is included in the specification unit and performs input control of the AC power so that a pulse serving as the AC power is input to each of the primary coils recognized by the recognition unit a predetermined number of times within a predetermined specified period, wherein
the identification power control unit sets the number of inputs of the pulse within the specified period to differ between the primary coils recognized by the recognition unit, and
the specification unit specifies the subject coil by comparing the number of detections of the AC power that is detected by the detection unit in the specified period with the number of inputs of the pulse that is set for each of the primary coils recognized by the recognition unit.

7. A power reception device capable of receiving AC power from a power transmission device that includes a primary coil to which AC power is input in a contactless manner, the power reception device comprising:
a secondary coil that receives the AC power, which is input to the primary coil, in a contactless manner when a predetermined transmission condition is satisfied;
a detection unit that detects AC power received by the secondary coil or DC power converted from the AC power;
a recognition unit that recognizes the primary coil; and
a specification unit that specifies, when the recognition unit recognizes the primary coils, a subject coil that satisfies the transmission condition from the primary coils recognized by the recognition unit, wherein
the specification unit includes an instruction unit that instructs input control of the AC power so that first identification power serving as the AC power is input to each of the primary coils recognized by the recognition unit and, subsequent to input of the first identification power, second identification power serving as the AC power is input to each of the primary coils recognized by the recognition unit,
the instruction unit instructs a set period to differ between the primary coils recognized by the recognition unit, wherein the set period is at least one of
a period from an input start time of the first identification power to an input start time of the second identification power,
a period from the input start time of the first identification power to an input end time of the second identification power,
a period from an input end time of the first identification power to the input start time of the second identification power, and
a period from the input end time of the first identification power to the input end time of the second identification power, and
the specification unit specifies the subject coil by comparing each set period, which differs between the primary coils recognized by the recognition unit, with a detection period that corresponds to each set period, which differs between the primary coils recognized by the recognition unit, and is derived from a detection result of the detection unit.
